## Europäisches Patentamt

## European Patent Office

## Office européen des brevets

(19)

(11) Veröffentlichungsnummer: **0 167 124**
**B1**

(12) # EUROPÄISCHE PATENTSCHRIFT

(45) Veröffentlichungstag der Patentschrift:
06.12.89

(51) Int. Cl.⁴: **H 04 L 11/00, H 04 M 3/36**

(21) Anmeldenummer: 85108026.7

(22) Anmeldetag: 28.06.85

(54) **Verfahren und Schaltungsanordnung zur statistischen Erfassung der Auslastung von einer Fernmeldevermittlungsanlage zugehörigen Betriebseinrichtungen.**

(30) Priorität: 03.07.84 DE 3424442

(43) Veröffentlichungstag der Anmeldung:
08.01.86 Patentblatt 86/2

(45) Bekanntmachung des Hinweises auf die Patenterteilung:
06.12.89 Patentblatt 89/49

(84) Benannte Vertragsstaaten:
AT CH DE IT LI NL SE

(56) Entgegenhaltungen:
PATENT ABSTRACTS OF JAPAN, Band 6, Nr. 100 (P-121) 978 , 9. Juni 1982; & JP-A-57 31 021
FIRST ANNUAL PHOENIX CONFERENCE ON COMPUTERS AND COMMUNICATIONS, CONFERENCE PROCEEDINGS, Phoenix, Arizona, 9th-12th May 1982, pages 364-368, IEEE, US; D.V. STANLEY: "Capacity modeling of the no. 4 ESS"

(73) Patentinhaber: Siemens Aktiengesellschaft,
Wittelsbacherplatz 2, D-8000 München 2 (DE)

(72) Erfinder: Gneiting, Dieter, Dipl.- Math.,
Gräfelfinger Strasse 70, D-8000 München 70 (DE)

## Beschreibung

Die Erfindung betrifft ein Verfahren und eine Schaltungsanordnung zur statistischen Erfassung der Auslastung von einer speicherprogrammierten Fernmeldevermittlungsanlage, insbesondere einer Daten- und Fernschreibvermittlungsanlage, zugehörigen Betriebseinrichtungen, welche in von mindestens einem Prozessor der Fernmeldevermittlungsanlage her aktivierbare Steuerungsvorgänge einbezogen werden, wobei innerhalb eines für die Erfassung festgelegten Zeitintervalls zu einer Vielzahl von über das Zeitintervall äquidistant verteilten Zeitpunkten jeweils eine Abfrage hinsichtlich der Einbeziehung der Betriebseinrichtungen in Steuerungsvorgänge durchgeführt und für jede der in einen Steuerungsvorgang einbezogenen Betriebseinrichtungen die Anzahl der Abfragen individuell aufsummiert wird.

Für eine optimale Ausnutzung einer Fernmeldevermittlungsanlage ist es wünschenswert, die Auslastung der der Vermittlungsanlage zugehörigen Betriebseinrichtungen zu überwachen. Bei den Betriebseinrichtungen kann es sich dabei beispielsweise um externe Speichermedien, wie Magnetbandspeicher, Magnetplattenspeicher usw., interne Speicher oder um für die Abwicklung des Vermittlungsbetriebes reservierte Sonderleitungen handeln. Aufgrund einer Überwachung der Auslastung der genannten Betriebseinrichtungen ist es beispielsweise möglich, bei Überschreiten des für die einzelnen Betriebseinrichtungen vorgesehenen Auslastungsgrades zusätzliche Betriebseinrichtungen in Betrieb zu nehmen bzw. bei einem zu geringen Auslastungsgrad parallel betriebener Betriebseinrichtungen einen Teil dieser außer Betrieb zu nehmen.

Im Zusammenhang mit einem Datensammelsystem, dessen Zentrale mit einer Mehrzahl von Ein-/Ausgabeeinrichtungen verbunden ist, ist es bereits bekannt (Zusammenfassung der japanischen Patentanmeldung 57 - 31 021), die Arbeitszeit der einzelnen Ein-/Ausgabeeinrichtungen dadurch zu erfassen, daß den Ein-/Ausgabeeinrichtungen in äquidistanten Zeitintervallen jeweils ein Abfragesignal zugeführt wird und die gerade in Betrieb sich befindenden Ein-/Ausgabeeinrichtungen daraufhin ein Antwortsignal zurückübertragen. Die Anzahl der von den einzelnen Ein-/Ausgabeeinrichtungen jeweils zurückübertragenen Antwortsignale wird dabei in den Ein-/Ausgabeeinrichtungen individuell zugeordneten Zähleinrichtungen aufsummiert.

Darüber hinaus ist bereits ein nach einem Multitasking-Prinzip arbeitendes elektronisches Vermittlungssystem bekannt (first annual phoenix conference on computers and communications, conference proceedings; Phoenix Arizona, 9. - 12. Mai 1982, Seiten 364 bis 368). Bei diesen Multitasking-Prinzip wird zwischen mit einer Basispriorität (base-level) zu bearbeitenden "tasks" und mit einer gegenüber dieser Basispriorität höheren Priorität zu bearbeitenden "tasks" unterschieden. Die mit der Basispriorität parallel zu bearbeitenden "tasks" werden in aufeinanderfolgenden Basiszyklen jeweils einmal für eine festgelegte Zeitspanne ausgeführt. Darüber hinaus erfolgt nach einer festgelegten Anzahl derartiger Zeitspannen eine Unterbrechung des gerade durchgeführten Basiszyklus, um höherpriore "tasks" nacheinander zu bearbeiten. Nach deren Bearbeitung wird der zuvor unterbrochene Basiszyklus fortgesetzt.

Es ist nun Aufgabe der vorliegenden Erfindung, einen Weg zu zeigen, wie bei einem Verfahren und bei einer Schaltungsanordnung der eingangs genannten Art mit einem geringen Steuerungsaufwand die Auslastung von einer Vermittlungsanlage zugehörigen Betriebseinrichtungen ermittelt werden kann.

Gelöst wird die vorstehend aufgezeigte Aufgabe bei einem Verfahren der eingangs genannten Art erfindungsgemäß dadurch, daß die Abfragen derart durchgeführt werden, daß bei der Aktivierung eines eine Betriebseinrichtung einbeziehenden Steuerungsvorganges die jeweils in Frage kommende Betriebseinrichtung als in einen Steuerungsvorgang einbezogen markiert wird, daß während des Betriebes der Fernmeldevermittlungsanlage mittels einer auf einer gegenüber den Prioritäten der Betriebseinrichtungen einbeziehenden Steuerungsvorgänge höheren Priorität ablaufenden, von dem jeweiligen Prozessor her aktivierten Erfassungsroutine zu den über das Zeitintervall äquidistant verteilten Zeitpunkten der jeweils gerade ablaufende Steuerungsvorgang kurzzeitig unterbrochen wird und daß während einer solchen Unterbrechung die gegebenenfalls in Steuerungsvorgänge einbezogenen Betriebseinrichtungen für ein individuelles Inkrementieren der für diese Betriebseinrichtungen bis dahin jeweils aufsummierten Anzahl von Unterbrechungen ermittelt werden.

Die Erfindung bringt den Vorteil mit sich, daß durch die Erfassungsroutine sämtliche in Steuerungsvorgänge einbezogenen Betriebseinrichtungen erfaßt werden können. Da die einzelnen Steuerungsvorgänge für die Erfassung der Betriebseinrichtungen lediglich kurzzeitig unterbrochen werden, ist die für den Ablauf der Erfassungsroutine bedingte zusätzliche dynamische Belastung der Vermittlungsanlage gering. Durch eine Auswertung der innerhalb des vorgegebenen Zeitintervalls ermittelten Auslastung der einzelnen Betriebseinrichtungen ist es in einfacher Weise möglich, abhängig vom Auslastungsgrad der Betriebseinrichtungen weitere Betriebseinrichtungen in Betrieb bzw. bestimmte Betriebseinrichtungen außer Betrieb zu nehmen.

Für den Fall, daß in einer Fernmeldevermittlungsanlage mehrere Prozessoren vorhanden sind, ist es für eine weitere Reduzierung des Steuerungsaufwandes vorteilhaft, daß von den der Fernmeldevermittlungsanlage zugehörigen Prozessoren jeweils lediglich ein Teil der Betriebseinrichtungen einbeziehenden Steuerungsvorgänge aktiviert wird, daß die Erfassungsroutine dabei lediglich von einem der Prozessoren aktiviert wird, daß der bzw. die weitere(n) Prozessor(en) bei einer Unterbrechung eines Steuerungsvorganges in dem einen Prozessor durch ein entsprechendes Signal zur Unterbrechung des in ihm bzw. ihnen jeweils gerade ablaufenden Steuerungsvorganges veranlaßt wird bzw. werden und daß die Anzahl der in den Prozessoren bei den einzelnen Unterbrechungen jeweils ermittelten Betriebseinrichtungen zentral registriert wird.

Zur Durchführung des Verfahrens gemäß der Erfindung ist es zweckmäßig, daß in der Fernmeldevermittlungsanlage als Abfrageeinrichtung eine Zähleranordnung vorgesehen ist, welche zu den festgelegten Zeitpunkten Steuersignale an den jeweiligen Prozessor abgibt, die diesen zur Unterbrechung des jeweils gerade ablaufenden Steuerungsvorganges veranlassen, daß mindestens ein Register vorgesehen ist, in welches Angaben bezüglich der in Steuerungsvorgänge einbezogenen Betriebseinrichtungen eintragbar sind und welches bei einer Unterbrechung des gerade ablaufenden Steuerungsvorganges zur Abgabe dieser Angaben von dem jeweiligen Prozessor her ansteuerbar ist, und daß anhand der von dem Register bereitgestellten Angaben den in Steuerungsvorgänge einbezogenen Betriebseinrichtungen zugeordnete Zähleinrichtungen für eine Erhöhung ihrer Zählerstände ansteuerbar sind. Hierdurch ergibt sich der Vorteil eines besonders geringen schaltungstechnischen Aufwandes für die Erfassung der Auslastung der in Steuerungsvorgänge einbezogenen Betriebseinrichtungen.

Anhand von Zeichnungen wird die Erfindung nachstehend beispielsweise näher erläutert.

Fig. 1    zeigt in einem Blockschaltbild eine Vermittlungsanlage, bei der die Erfindung angewandt ist,

Fig. 2    zeigt ein Zeitdiagramm, auf das im Zuge der Erläuterung der Erfindung eingegangen wird.

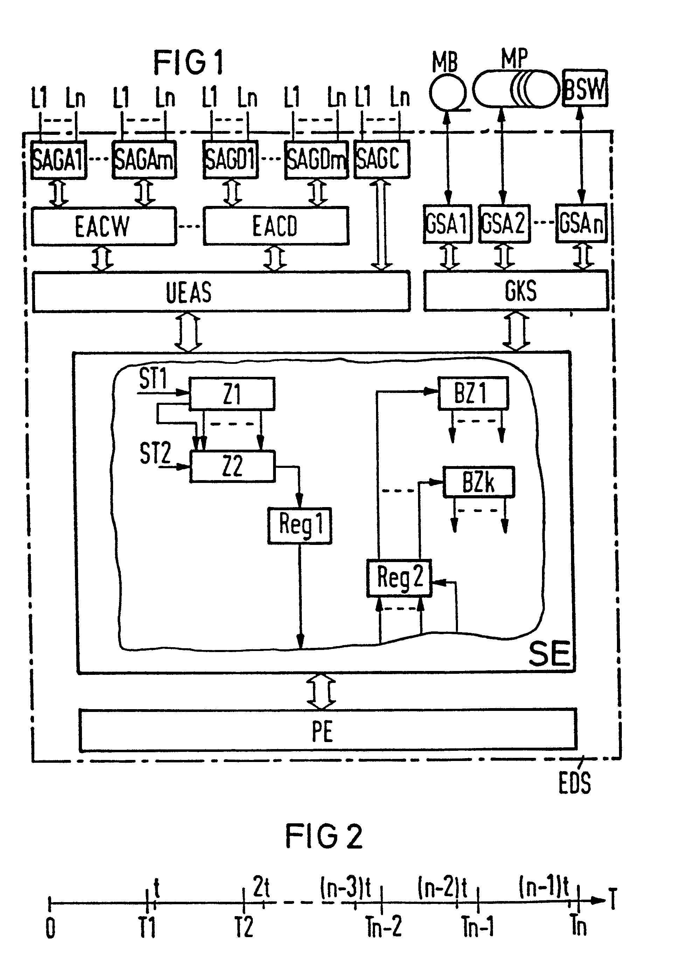

In Fig. 1 ist ausschnittweise eine Daten- und Fernschreibvermittlungsanlage EDS dargestellt. Von dieser Daten- und Fernschreibvermittlungsanlage sind zu einer Gruppe von Leitungsanschlußschaltungen gehörende Leitungsanschlußschaltungen SAGA1 bis SAGAm, zu einer zweiten Gruppe von Leitungsanschlußschaltungen gehörende Leitungsanschlußschaltungen SAGD1 bis SAGDm, eine Leitungsanschlußschaltung SAGC, in den einzelnen Gruppen von Leitungsanschlußschaltungen zugehörige Eingabe-/Ausgabe-Codewandler EACW bzw. EACD, eine Übertragungsablaufsteuerung UEAS, eine Speichereinheit SE und eine Programmsteuereinheit PE angedeutet. Mit der Speichereinheit SE ist außerdem eine Gerätekanalsteuerung GKS verbunden. An diese Gerätekanalsteuerung ist eine Mehrzahl von Geräteanschlußschaltungen GSA1 bis GSAn angeschlossen. Über diese Geräteanschlußschaltungen steht die Daten- und Fernschreibvermittlungsanlage EDS mit externen Betriebseinrichtungen, wie Magnetbandspeichern, Magnetplattenspeichern, Wartungsblattschreibern usw., in Verbindung. Von den genannten Geräteanschlußschaltungen sind in Fig. 1 lediglich die Geräteanschlußschaltungen GSA1, GSA2 und GSAn dargestellt. An die Geräteanschlußschaltung GSA1 möge beispielsweise ein Magnetbandspeicher MB, an die Geräteanschlußschaltung GSA2 ein Magnetplattenspeicher MP und mit der Geräteanschlußschaltung GSAn ein Wartungsblattschreiber BSW angeschlossen sein.

Die mit dem bereits erwähnten Eingabe-/Ausgabe-Codewandler EACW verbundenen Leitungsanschlußschaltungen dienen dazu, digitale Datensignale polaritätswechselweise zu verarbeiten. Die mit dem anderen Eingabe-/Ausgabe-Codewandler EACD verbundenen Leitungsanschlußschaltungen dienen dagegen zur Verarbeitung von sogenannten Bitgruppen. Diese Bitgruppen sind jeweils eine Mehrzahl von Bits, beispielsweise 8 Bits, umfassende digitale Datensignale, die auch als Envelopes bezeichnet werden. Die Aufgabe dieser Eingabe-/Ausgabe-Codewandler besteht unter anderem darin, über die einzelnen Anschlußschaltungen zugeführte Signale zu dem eigentlichen Verarbeitungsteil der Daten- und Fernschreibvermittlungsanlage EDS weiterzuleiten bzw. von diesem Verarbeitungsteil her über die Leitungsanschlußschaltungen abzugebende Signale weiterzuleiten. Die Eingabe-/Ausgabe-Codewandler sind hierzu mit der Übertragungsablaufsteuerung UEAS verbunden. Diese Übertragungsablaufsteuerung steuert den Signalaustausch zwischen den Eingabe-/Ausgabe-Codewandlern und der Speichereinheit SE. In entsprechender Weise steuert die Gerätekanalsteuerung GKS den Signalaustausch zwischen den bereits genannten Geräteanschlußschaltungen GSA1 bis GSAn und der Speichereinheit SE. Die Speichereinheit leitet die ihr von der Übertragungsablaufsteuerung und der Gerätekanalsteuerung zugeführten Signale an die Programmsteuereinheit PE· weiter. Außerdem gibt die Speichereinheit SE die ihr von der Programmsteuereinheit zugeführten Signale an die Übertragungsablaufsteuerung UEAS bzw. an die Gerätekanalsteuerung GKS ab.

Die in der Zeichnung angedeuteten Leitungsanschlußschaltungen sind jeweils mit einer Mehrzahl von Leitungsabschnitten L1 bis Ln verbunden. Bei den mit den Leitungsanschlußschaltungen SAGA1 bis SAGAm verbundenen Leitungsabschnitten handelt es sich dabei um Leitungsabschnitte, auf denen digitale Datensignale nach einem asynchronen Übertragungsverfahren übertragen werden. Auf den mit den übrigen Leitungsanschlußschaltungen SAGD1 bis SAGDm verbundenen Leitungsabschnitten erfolgt dagegen eine Übertragung von digitalen Datensignalen nach einem synchronen Übertragungsverfahren. Bei den genannten Leitungsabschnitten möge es sich dabei um die hier dargestellte Daten- und Fernschreibvermittlungsanlage mit weiteren Vermittlungsanlagen verbindende Verbindungsleitungen oder um Teilnehmeranschlußleitungen, die die Daten- und Fernschreibvermittlungsanlage mit Teilnehmerendeinrichtungen verbindet, handeln. Bei den Leitungsabschnitten der Leitungsanschlußschaltung SAGC möge es sich dagegen um Sonderleitungen handeln, über die Überwachungs- und Steuersignale für die Vermittlungsanlage übertragen werden können. Derartige Überwachungs- und Steuersignale können beispielsweise Angaben bezüglich der für die einzelnen über die Vermittlungsanlage verlaufenden Verbindungen zu entrichtenden Gebühren sein, die in der Vermittlungsanlage ermittelt und zu einer zentralen Gebührenerfassungseinrichtung hin übertragen werden. Bei den Sonderleitungen handelt es sich im übrigen um festgeschaltete Leitungen, die auch als Standleitungen bezeichnet werden. Im Gegensatz dazu werden über die bereits genannten Verbindungsleitungen und Teilnehmeranschlußleitungen Wählverbindungen aufgebaut.

Von der genannten Speichereinheit SE ist in Fig. 1 nur der Schaltungsteil dargestellt, der der statistischen Erfassung der Auslastung von Betriebseinrichtungen dient. Unter Betriebseinrichtungen sollen dabei neben den bereits erwähnten externen Betriebseinrichtungen und den Sonderleitungen auch innerhalb der Daten- und Fernschreibvermittlungsanlage vorhandene Speicher verstanden werden. Der gerade genannte Schaltungsteil weist eine aus zwei Zählern Z1, Z2 und einem Register Reg1 bestehende Zähleranordnung auf. Bei dem Zähler Z1 handelt es sich um einen Vorwärtszähler, dessen Zählerstand, beginnend bei "Null", im zeitlichen Abstand von 10 ms bis zu einem maximalen Zählerstand von 6250 inkrementiert wird. Der Zähler erhält hierzu einen entsprechenden Steuertakt ST1 zugeführt. Nach jedem Inkrementieren gibt dieser Zähler an seinen Zählerausgängen den jeweils gerade aktuellen Zählerstand ab. Dieser aktuelle Zählerstand wird dem Zähler Z2 zugeführt, der diesen, gesteuert durch ein von dem Zähler Z1 abgegebenes Steuersignal, als Anfangszählerstand übernimmt. Der Zählerstand des Zählers Z2, bei dem es sich um einen Rückwärtszähler handeln möge, wird, durch einen Steuertakt ST2 gesteuert, im zeitlichen Abstand von 0,0016 ms inkrementiert. Bei einem Zählerstand "Null" gibt der Zähler Z2 ein Ausgangssignal an das Register Reg1 ab. Ein solches in das Register übernommene Ausgangssignal dient, wie im folgenden noch erläutert werden wird, der Aktivierung einer Erfassungsroutine von der Programmsteuereinheit PE her. Durch die angegebenen Steuertakte ST1 und ST2 werden derartige Ausgangssignale während einer Zeitspanne von ca. 1 Minute im zeitlichen Abstand von 10,0016 ms in das Register Reg1 übernommen. In Fig. 2 ist dieses Zeitraster schematisch dargestellt. Mit T1 bis Tn sind dabei die einzelnen 10 ms-Zeitintervalle bezeichnet. Die Zeitpunkte t bis (n-1) t geben die im Abstand von 10,0016 ms aufeinanderfolgenden Zeitpunkte für die Abgabe eines Ausgangssignals an. Auf die spezielle Wahl dieses Rasters wird im folgenden noch näher eingegangen.

Der der Erfassung der Auslastung von Betriebseinrichtungen dienende Schaltungsteil der Speichereinheit SE weist außerdem ein weiteres Register Reg2 auf, in welches Angaben bezüglich derjenigen Betriebseinrichtungen eintragbar sind, welche gerade in von der Programmsteuereinheit PE her aktivierte Steuerungsvorgänge einbezogen sind. Dieses Register steuert anhand der in ihm gespeicherten Angaben bezüglich der in Steuerungsvorgänge einbezogenen Betriebseinrichtungen zu einer Zähleranordnung BZ1 bis BZk gehörende Zähler an. Die in dem Register Reg2 gespeicherten Angaben werden dabei durch ein an einen Steuereingang des Registers Reg2 von der Programmsteuereinheit PE her abgegebenes Steuersignal bereitgestellt. Die Anzahl k der zu der Zähleranordnung gehörenden Zähler ist gleich der Anzahl der zu berücksichtigenden Betriebseinrichtungen.

Nachdem zuvor der Aufbau der der statistischen Erfassung der Auslastung von Betriebseinrichtungen dienende Schaltungsteil der Speichereinheit SE erläutert worden ist, wird nunmehr unter Bezugnahme auf die Fig. 1 und 2 auf das Verfahren gemäß der vorliegenden Erfindung eingegangen.

Während des Betriebes der Daten- und Fernschreibvermittlungsanlage EDS ist der Ablauf einer Vielzahl von Steuerungsvorgängen erforderlich, wie z. B. Steuerungsvorgänge für einen Verbindungsaufbau, für einen Verbindungsabbau, für die Datensignalübertragung bei bestehenden Verbindungen, für die Übertragung von Überwachungs- und Steuersignalen über Sonderleitungen, für den Zugriff auf externe Betriebseinrichtungen usw. Jedem dieser Steuerungsvorgänge ist dabei eine bestimmte Priorität für seine Aktivierung von der Programmsteuereinheit PE her zugeteilt. Der Ablauf der einzelnen Steuerungsvorgänge erfolgt nun in der Weise, daß für jeden von der Programmsteuereinheit her zu aktivierenden Steuerungsvorgang eine gesonderte Anforderung in einen in Fig. 1 nicht dargestellten Anforderungspuffer eingetragen wird. Die in diesen Anforderungspuffer eingetragenen Anforderungen werden innerhalb einer Zeitspanne von 10 ms durch die Programmsteuereinheit PE verarbeitet, d.h. die den Anforderungen entsprechenden Steuerungsvorgänge werden in der durch die Prioritäten dieser Steuerungsvorgänge vorgegebenen Reihenfolge aktiviert. Bei der Aktivierung eines solchen Steuerungsvorganges wird auch ermittelt, ob in diesen eine Betriebseinrichtung einzubeziehen ist.

Ist dies der Fall, so wird ein entsprechender Eintrag in das Register Reg2 durch Setzen eines bestimmten Bits vorgenommen. Hierfür kann beispielsweise jeder zu berücksichtigenden Betriebseinrichtung eine Registerzelle dieses Registers zugeordnet sein. Ein solcher Eintrag bleibt bis zum vollständigen Ablauf des jeweiligen Steuerungsvorganges bestehen. Ein Steuerungsvorgang wird im übrigen durch einen auf einer höheren Priorität ablaufenden Steuerungsvorgang unterbrochen, so daß gleichzeitig mehrere Betriebseinrichtungen als in einen Steuerungsvorgang einbezogen markiert sein können.

Für die statistische Erfassung der Auslastung von Betriebseinrichtungen werden nun von der in fig. 1 dargestellten Zähleranordnung Z1, Z2 und Reg1 im zeitlichen Abstand von 10,0016 ms Ausgangssignale abgegeben. Durch diese Festlegung des zeitlichen Abstandes ist sichergestellt, daß innerhalb der Erfassungszeitspanne, hier ca. 1 Minute, sämtliche Bereiche der in fig. 2 dargestellten 10 ms-Zeitintervalle in die Ermittlung der innerhalb dieser 10 ms-Zeitintervalle ablaufenden Steuerungsvorgänge einbezogen sind. Die Aktivierung der Zähleranordnung kann dabei entweder manuell durch eine entsprechende Bedienungseingabe über den in Fig. 1 dargestellten Wartungsblattschreiber BSW oder automatisch in vorgegebenen Zeitabständen erfolgen. Mit den von der Zähleranordnung abgegebenen Ausgangssignalen wird die Aktivierung einer Erfassungsroutine durch die Programmsteuereinheit PE angefordert. Dieser Erfassungsroutine ist dabei eine gegenüber den Prioritäten der zu erfassenden Steuerungsvorgänge höhere Priorität zugeteilt. Durch den Ablauf der Erfassungsroutine wird ein gerade ab laufender Steuerungsvorgang kurzzeitig unterbrochen. Dabei werden die in dem Register Reg2 gespeicherten Angaben auf ein von der Programmsteuereinheit PE abgegebenes Steuersignal hin am Ausgang des Registers bereitgestellt, um diesen Angaben entsprechende Zähler der Zähleranordnung BZ1 bis BZk anzusteuern. Die momentanen Zählerstände der angesteuerten Zähler werden dabei inkrementiert.

Die Zählerstände der Zähler der gerade erwähnten Zähleranordnung werden entweder nach Ablauf der Erfassungszeitspanne, hier ca. 1 Minute, oder nach einer Mehrzahl derartiger Erfassungszeitspannen für eine Auswertung ausgelesen. Sind mehrere Erfassungszeitspannen zu berücksichtigen, so ist es zweckmäßig, eine weitere Zähleranordnung vorzusehen, deren Zählerstand mit jedem Ablauf einer Erfassungszeitspanne bis zu einem vorgegebenen Zählerstand verändert wird. Der Ablauf einer Erfassungszeitspanne wird dabei dieser weiteren Zähleranordnung durch den Zählerstand "Null" des in Fig. 1 dargestellten Zählers Z1 angezeigt.

Bisher wurde der Fall betrachtet, daß die Daten- und Fernschreibvermittlungsanlage EDS, wie in Fig. 1 dargestellt, lediglich eine Programmsteuereinheit PE aufweist. Sind dagegen mehrere, jeweils lediglich einen Teil der in der Vermittlungsanlage ablaufenden Steuerungsvorgänge aktivierende Programmsteuereinheiten vorgesehen, so ist es für die dynamische Belastung der einzelnen Programmsteuereinheiten vorteilhaft, daß die bereits erwähnte Erfassungsroutine lediglich von einer der Programmsteuereinheiten aktiviert wird. Bei einer Unterbrechung eines Steuerungsvorganges in der die Erfassungsroutine aktivierenden Programmsteuereinheit gibt diese ein Steuersignal an die weitere bzw. an die weiteren Programmsteuereinheiten ab, welches dort ebenfalls zur Erfassung der in Steuerungsvorgänge einbezogenen Betriebseinrichtungen eine Unterbrechung des gerade ablaufenden Steuerungsvorganges bewirkt. Die Anzahl der in den Programmsteuereinheiten bei den einzelnen Unterbrechungen jeweils ermittelten Betriebseinrichtungen wird wieder in der in Fig. 1 dargestellten Zähleranordnung BZ1 bis BZk registriert. Für die Ansteuerung der einzelnen Zähler dieser Zähleranordnung ist eine der Anzahl der in der Daten- und Fernschreibvermittlungsanlage vorhandenen Programmsteuereinheiten entsprechende Anzahl von Registern Reg2 vorzusehen. Die Ausgänge der einzelnen Register können parallel geschaltet sein, so daß gleichzeitig mehrere Zähler der Zähleranordnung angesteuert werden können. Der fall, daß von mehreren Registern gleichzeitig auf ein und denselben Zähler zugegriffen wird, wird dadurch verhindert, daß jede der Programmsteuereinheiten lediglich einen Teil der zur Verfügung stehenden Betriebseinrichtungen in Steuerungsvorgänge einbeziehen kann, d.h. daß jeder Programmsteuereinheit nur bestimmte Betriebseinrichtungen zur Verfügung stehen.

Anhand der Zählerstände der einzelnen Zähler der Zähleranordnung BZ1 bis BZk läßt sich die Auslastung der einzelnen Betriebseinrichtungen der Daten- und Fernschreibvermittlungsanlage EDS ermitteln. Wie bereits oben erwähnt, sollen dabei unter Betriebseinrichtungen externe Betriebseinrichtungen, für die Steuerung des Betriebes der Vermittlungsanlage reservierte Sonderleitungen und bestimmte interne Speicher der Vermittlungsanlage verstanden werden. Die Zählerstände der den einzelnen Betriebseinrichtungen zugeordneten Zähler geben Aufschluß über den Auslastungsgrad der einzelnen Betriebseinrichtungen innerhalb der vorgegebenen Erfassungszeitspanne. Die Zählerstände der einzelnen Zähler können demzufolge als Kriterium herangezogen werden, ob während des Betriebes der Daten- und Fernschreibvermittlungsanlage EDS bestimmte Betriebseinrichtungen abzuschalten bzw. zuzuschalten sind. Auf diese Weise ist eine optimale Auslastung der der Vermittlungsanlage zur Verfügung stehenden Betriebseinrichtungen gewährleistet. Das Abschalten bzw. das Zuschalten von Betriebseinrichtungen kann dabei entweder automatisch bei Ermittlung eines bestimmten Auslastungsgrades der gerade mit der Vermittlungsanlage verbundenen Betriebseinrichtungen oder durch eine manuelle Eingabe über beispielsweise den in Fig. 1 dargestellten Wartungsblattschreiber BSW erfolgen, nachdem über diesen die Zählerstände der einzelnen Zähler ausgegeben worden sind.

Bezüglich der mit den Leitungsanschlußschaltungen SAGA1 bis SAGAm bzw. SAGD1 bis SAGDm verbundenen Leitungsabschnitte sei noch darauf hingewiesen, daß es sich bei einigen von ihnen auch um Sonderleitungen handeln kann, an die Blattschreiber oder Datensichtstationen zur Steuerung und Protokollierung von in der Daten- und Fernschreibvermittlungsanlage ablaufenden Steuerungsvorgängen angeschlossen sind oder die mit Verarbeitungseinrichtungen zur weiteren Behandlung eintreffender Datensignale

verbunden sind.

Zur Erläuterung des Verfahrens gemäß der vorliegenden Erfindung ist von einer Daten- und Fernschreibvermittlungsanlage ausgegangen worden. Die Anwendung dieses Verfahrens ist jedoch nicht auf derartige Vermittlungsanlagen beschränkt. Vielmehr ist dieses Verfahren in beliebigen speicherprogrammierten Fernmeldevermittlungsanlagen anwendbar, in denen Betriebseinrichtungen in von Prozessoren dieser Fernmeldevermittlungsanlagen her aktivierbare Steuerungsvorgänge einbezogen sind.

**Patentansprüche**

1. Verfahren zur statistischen Erfassung der Auslastung von einer speicherprogrammierten Fernmeldevermittlungsanlage (EDS), insbesondere einer Daten- und Fernschreibvermittlungsanlage, zugehörigen Betriebseinrichtungen (MB, MP, BSW), welche in von mindestens einem Prozessor (PE) der Fernmeldevermittlungsanlage her aktivierbare Steuerungsvorgänge einbezogen werden, wobei innerhalb eines für die Erfassung festgelegten Zeitintervalls zu einer Vielzahl von über das Zeitintervall äquidistant verteilten Zeitpunkten jeweils eine Abfrage hinsichtlich der Einbeziehung der Betriebseinrichtungen in Steuerungsvorgänge durchgeführt und für jede der in einen Steuerungsvorgang einbezogenen Betriebseinrichtungen die Anzahl der Abfragen individuell aufsummiert wird, *dadurch gekennzeichnet,* daß die Abfragen derart durchgeführt werden, daß bei der Aktivierung eines eine Betriebseinrichtung einbeziehenden Steuerungsvorganges die jeweils in Frage kommende Betriebseinrichtung als in einem Steuerungsvorgang einbezogen markiert wird, daß während des Betriebs der Fernmeldevermittlungsanlage mittels einer auf einer gegenüber den Prioritäten der Betriebseinrichtungen einbeziehenden Steuerungsvorgänge höherer Priorität ablaufenden, von dem jeweiligen Prozessor her aktivierten Erfassungsroutine zu den über das Zeitintervall äquidistanten Zeitpunkten der jeweils gerade ablaufende Steuerungsvorgang kurzzeitig unterbrochen wird und daß während einer solchen Unterbrechung die gegebenenfalls in Steuerungsvorgänge einbezogenen Betriebseinrichtungen für ein individuelles Inkrementieren der für diese Betriebseinrichtungen bis dahin aufsummierten Anzahl von Unterbrechungen ermittelt werden.

2. Verfahren nach Anspruch 1, *dadurch gekennzeichnet,* daß von den der Fernmeldevermittlungsanlage (EDS) zugehörigen Prozessoren (PE) jeweils lediglich ein Teil der Betriebseinrichtungen einbeziehenden Steuerungsvorgänge aktiviert wird, daß die Erfassungsroutine dabei lediglich von einem der Prozessoren aktiviert wird, daß der bzw. die weitere(n) Prozessor(en) bei einer Unterbrechung eines Steuerungsvorganges in dem einen Prozessor durch ein entsprechendes Signal zur Unterbrechung des in ihm bzw. ihnen jeweils gerade ablaufenden Steuerungsvorganges veranlaßt wird bzw. werden und daß die Anzahl der in den Prozessoren bei den einzelnen Unterbrechungen jeweils ermittelten Betriebseinrichtungen zentral registriert wird.

3. Schaltungsanordnung zur statistischen Erfassung der Auslastung von einer speicherprogrammierten Fernmeldevermittlungsanlage (EDS), insbesondere einer Daten- und Fernschreibvermittlungsanlage, zugehörigen Betriebseinrichtungen (MB, MP, BSW), welche in von mindestens einem Prozessor (PE) der Fernmeldevermittlungsanlage her aktivierbare Steuerungsvorgänge einbeziehbar sind, mit einer Abfrageeinrichtung (Z1, Z2, Reg1), welche innerhalb eines für die Erfassung festgelegten Zeitintervalls zu einer Vielzahl von über das Zeitintervall äquidistant verteilten Zeitpunkten jeweils eine Abfrage hinsichtlich der Einbeziehung der Betriebseinrichtungen in Steuerungsvorgänge durchführt, und mit einer Mehrzahl von den Betriebseinrichtungen jeweils zugeordneten Zähleinrichtungen (BZ1 bis BZk), in welchen bei einer Einbeziehung der jeweils zugeordneten Betriebseinrichtung in einen Steuerungsvorgang die Anzahl der Abfragen aufsummiert ist, *dadurch gekennzeichnet,* daß in der Fernmeldevermittlungsanlage (EDS) als Abfrageeinrichtung eine Zähleranordnung (Z1, Z2, Reg1) vorgesehen ist, welche zu den festgelegten Zeitpunkten Steuersignale an den jeweiligen Prozessor (PE) abgibt, die diesen zur Unterbrechung des jeweils gerade ablaufenden Steuerungsvorganges veranlassen, daß mindestens ein Register (Reg2) vorgesehen ist, in welches Angaben bezüglich der in Steuerungsvorgänge einbezogenen Betriebseinrichtungen eintragbar sind und welches bei einer Unterbrechung des gerade ablaufenden Steuerungsvorganges zur Abgabe dieser Angaben von dem jeweiligen Prozessor (PF) her ansteuerbar ist, und daß anhand der von dem Register (Reg2) bereitgestellten Angaben die den in Steuerungsvorgänge einbezogenen Betriebseinrichtungen zugeordneten Zähleinrichtungen für eine Erhöhung ihrer Zählerstände ansteuerbar sind.

**Claims**

1. Method for statistically registering the load of operating facilities (MB, MP, BSW) belonging to a storedprogram communications exchange (EDS), particularly to a data and telex exchange, which are included in the control processes which can be activated from at least one processor (PE) of the communications exchange, in which arrangement an interrogation with respect to the inclusion of the operating facilities in control processes is in each case carried out within a time interval specified for the registration, at a plurality of times equidistantly distributed over the time interval, and for each of the operating facilities included in a control process the number of interrogations is individually summed together, *characterized in*

that the interrogations are carried out in such a manner that during the activation of a control process including an operating facility, the operating facility which is in each case considered is marked as included in a control process, in that during the operation of the communications exchange, the control process which happens to be running in each case is temporarily interrupted at the times, which are equidistant over the time interval, by means of a registration routine activated from the respective processor which is running at a priority which is higher than the priorities of the control processes including the operating facilities and in that during such an interruption, the operating facilities, which may be included in control processes, are determined for an individual incrementing of the number of interruptions which have been hitherto summed together for these operating facilities.

2. Method according to Claim 1, *characterized in that* in each case only a part of the control processes including the operating facilities is activated by the processors (PE) belonging to the communications exchange (EDS), in that the registration routine is only activated by one of the processors in this connection, in that, with an interruption of a control process in one processor, the other processor or processors is or are caused by a corresponding signal to interrupt the control process which happens to be running in it or them in each case, and in that the number of the operating facilities in each case determined during the individual interruptions in the processors is centrally registered.

3. Circuit arrangement for statistically registering the load of operating facilities (MB, MP, BSW) belonging to a stored-program communications exchange (EDS), particularly to a data and telex exchange, which can be included in control processes which can be activated from at least one processor (PE) of the communications exchange, comprising an interrogating device (Z1, Z2, Reg1) which in each case carries out an interrogation with respect to the inclusion of the operating facilities in control processes within a time interval specified for the registration, at a plurality of times equidistantly distributed over the time interval, and comprising a plurality of counting devices (BZ1 to BZk) which are in each case allocated to the operating facilities and in which the number of interrogations is summed together during an inclusion of the respective associated operating facility, characterized in that a counter arrangement (Z1, Z2, Reg1) is provided as interrogation device in the communications exchange (EDS), which counter arrangement emits at the specified times control signals to the respective processor (PE) which cause the latter to interrupt the control process which happens to be running in each case, in that at least one register (Reg2) is provided into which information with respect to the operating facilities included in control processes can be entered and which, during an interruption of the control process which happens to be running, can be activated from the respective processor (PE) to output this information, and in that the counting devices allocated to the operating facilities included in control processes can be activated for an increasing of their counts by means of the information provided by the register (Reg2).

**Revendications**

1. Procédé pour déterminer de façon statistique la charge de dispositifs d'exploitation (MB, MP, BSW), qui sont associés à un central de télécommunications (EDS), programmé par une mémoire, notamment un central de commutation de données et de télescription, et participent à des opérations de commande pouvant être activées à partir d'au moins un processeur (PE) du central de télécommunications, et selon lequel, une interrogation respective concernant la participation des dispositifs d'exploitation à des opérations de commande est exécutée pendant un intervalle de temps fixé pour la détermination, en une multiplicité d'instants répartis d'une manière équi-distante dans cet intervalle de temps, et le nombre des interrogations est sommé individuellement pour chacun des dispositifs d'exploitation participant à une opération de commande, *caractérisé par le fait que* les interrogations sont effectuées de telle sorte que, lors un déclenchement d'une opération de commande, à laquelle participe un dispositif d'exploitation, le dispositif d'exploitation respectivement considéré est repéré comme participant à une opération de commande, *que*, pendant le fonctionnement du central de télécommunications, l'opération de commande se déroulant précisément est interrompue pendant un bref intervalle de temps au moyen d'un sous-programme de détection se déroulant avec une priorité supérieure aux priorités des opérations de commande faisant intervenir des dispositifs d'exploitation, et déclenché à partir du processeur considéré, aux instants équidistants dans l'intervalle de temps, et *que*, pendant une telle interruption, les dispositifs d'exploitation, qui participent éventuellement à des opérations de commande, sont déterminés pour une incrémentation éventuelle du nombre d'interruptions, sommé jusqu'à cet instant pour ces dispositifs d'exploitation.

2. Procédé suivant la revendication 1, *caractérisé par le fait que* seule une partie des opérations de commande, mettant en oeuvre des dispositifs d'exploitation, est déclenchée par les processeurs (PE) associés au central de télécommunications (EDS), *que* le sous-programme de détection est déclenché uniquement par l'un des processeurs, *que* le ou les autres processeurs sont activés, lors d'une interruption d'une opération de commande dans un processeur, par un signal correspondant de manière à interrompre l'opération de commande qui s'y déroule précisément, et *que* le nombre des dispositifs d'exploitation respectivement dé terminés dans les processeurs

au cours des différentes interruptions, est enregistré d'une manière centralisée.

3. Montage pour la détermination statistique de la charge de dispositifs d'exploitation (MB, MP, BSW), associés à un central de télécommunication (EDS), programmé par une mémoire, notamment un central de commutation de données et de télescriptions, et pouvant participer à des opérations de commande pouvant être déclenchées à partir d'au moins un processeur (PE) du central de télécommunications, et comportant un dispositif d'interrogation (Z1, Z2, Reg1), qui exécute respectivement une interrogation concernant la participation des dispositifs d'exploitation à des opérations de commande, pendant un intervalle de temps fixé pour la détermination, en un grand nombre d'instants répartis de façon équidistante dans cet intervalle de temps, et une multiplicité de dispositifs de comptage (BZ1 à BZk), associés respectivement à une multiplicité des dispositifs d'exploitation et dans lesquels le nombre des interrogations est sommé dans le cas d'une participation du dispositif d'exploitation respectivement considéré à une opération de commande, *caractérisé par le fait que,* dans le central de télécommunications (EDS), il est prévu comme dispositif d'interrogation un dispositif de comptage (Z1, Z2, Reg1), qui délivre au processeur respectif (PE), aux instants fixés, des signaux de commande déclenchant ce processeur pour qu'il interrompe l'opération de commande se déroulant précisément, *qu'*il est prévu au moins un registre (Reg2), dans lequel peuvent être introduites des indications concernant les dispositifs d'exploitation participant a des opérations de commande et qui, dans le cas d'une interruption de l'opération de commande précisément en cours, peut être commandé par le processeur respectif (PE) de manière à délivrer ces indications, et *que* les dispositifs de comptage associés aux dispositifs d'exploitation participant à des opérations de commande peuvent être commandés, sur la base des indications délivrées par le registre (Reg2), dans le sens d'un accroissement de leurs états de comptage.

## FIG 1

## FIG 2